# EUROPÄISCHE PATENTSCHRIFT

(11) **EP 1 943 559 B1**
(45) Veröffentlichungstag und Bekanntmachung des Hinweises auf die Patenterteilung: **18.01.2012**
(21) Anmeldenummer: 06807671.0
(22) Anmeldetag: 30.10.2006
(51) Int. Cl.: G02B 27/22, G06K 19/07

(54) **DOKUMENT MIT EINER ANZEIGEVORRICHTUNG**
DOCUMENT COMPRISING A DISPLAY ELEMENT
DOCUMENT DOTE D'UN DISPOSITIF D'AFFICHAGE

(30) Priorität: 28.10.2005 DE 102005052070
(43) Veröffentlichungstag der Anmeldung: 16.07.2008
(60) Teilanmeldung: 11190728.3
(73) Patentinhaber: Bundesdruckerei GmbH, 10958 Berlin (DE)
(72) Erfinder: PFLUGHOEFFT, Malte, 13347 Berlin (DE); PAESCHKE, Manfred, 16348 Wandlitz (DE); HOPPE, Andreas, 12683 Berlin (DE); MUTH, Oliver, 12277 Berlin (DE); DRESSEL, Olaf, 14641 Wustermark (DE)
(74) Vertreter: Richardt Patentanwälte
(86) Internationale Anmeldenummer: PCT/EP2006/067947
(87) Internationale Veröffentlichungsnummer: WO 2007/048855

(56) Entgegenhaltungen:
- EP-A- 1 154 398
- JP-A- 10 217 655
- US-A1- 6 068 183
- US-A1- 2002 019 296
- US-A1- 2004 061 683

## Beschreibung

Die Erfindung betrifft ein Dokument mit einer Anzeigevorrichtung zur autostereoskopischen Erzeugung eines dreidimensionalen Bildes sowie elektronisches Papier, insbesondere Wert- und Sicherheitsdokumente, Chipkarten und tragbare elektronische Geräte mit einer solchen Anzeigevorrichtung.

Aus dem Stand der Technik sind autostereoskopische Verfahren für die Wiedergabe von dreidimensionalen Bildern seit langem bekannt. Im Unterschied zu stereoskopischen Verfahren erfolgt bei autostereoskopischen Verfahren die Erzeugung des dreidimensionalen Bildeindrucks ohne zusätzliche Hilfsmittel, wie zum Beispiel Shutter-Brillen, Rot-Grün-Brillen, Brillen mit Polarisationsfiltern oder Head-Mounted-Displays.

Eine autostereoskopische dreidimensionale Bildwiedergabe kann beispielsweise unter Verwendung von so genannten Barriere-Strukturen erfolgen, die auch als Paralax-Barrieren bezeichnet werden.

Ferner sind so genannte Integral-Verfahren aus dem Stand der Technik bekannt, bei denen der dreidimensionale Bildeindruck durch eine Vielzahl von Linsen erzeugt wird, zum Beispiel durch eine matrixförmige Anordnung von sphärischen, insbesondere halbkugelförmigen Linsen.

Ferner ist die autostereoskopische Erzeugung von dreidimensionalen Bilder auch mit Hilfe von holographischen Elementen bzw. holographischen Mikrostrukturen an sich aus dem Stand der Technik bekannt.

Darüber hinaus sind so genannte Lentikularverfahren zur Erzeugung autostereoskopischer dreidimensionaler Bilder aus dem Stand der Technik bekannt. Dabei wird zum Beispiel ein Linienraster aus konvexen zylindrischen Linsen, die auch als "Lentikulars" bezeichnet werden, zur Erzeugung des dreidimensionalen Bildeindrucks verwendet.

Einen Überblick über verschiedene vorbekannte autostereoskopische Verfahren gibt insbesondere "History of Lentikular and Related Autostereoscopic Methods", David E. Robersts (http://www.microlens.com/HistoryofLentikular.pdf) sowie "Autostereoskopische Displays", Seminar aktuelle Themen der virtuellen Realität, RWTH Aachen (http://www.rz.rwth-aachen.de/vr/teaching/seminars/ws2003/Presentation/Eggrerath.pdf).

Solche autostereoskopischen Verfahren werden im Stand der Technik für Computer-Monitore eingesetzt. Entsprechende Computer-Monitore sind bekannt aus http://www.research.philips.com/technologies/display/3d/technical.html sowie "Multi-User 3D-Displays", C. van Berkel, J. H. A. Schmitz, Philips Research Labs (http://www.research.philips.com/technologies/display/3d/downloads/tile2000-1458.pdf) sowie den entsprechenden Patentpublikationen WO 99/05 559, US 6,118,584 und US 6,064,424.

Aus der WO 99/38117 ist eine Smart Card mit einem Anzeigeelement bekannt. Das Anzeigeelement hat einen Barrier Streifen zur Erzeugung eines stereoskopischen Effekts.

Aus US 6,068,183 ist eine Chipkarte mit einem Display zur Wiedergabe von dreidimensionalen Bildern bekannt. Das Display hat hierzu einen Barriere-Streifen.

Der Erfindung liegt dem gegenüber die Aufgabe zu Grunde, ein verbessertes Dokument mit einer Anzeigevorrichtung zu schaffen.

Die der Erfindung zu Grunde liegende Aufgabe wird mit den Merkmalen des Patentanspruchs 1 gelöst. Bevorzugte Ausführungsformen der Erfindung sind in den abhängigen Patentansprüchen angegeben.

Die erfindungsgemäße Anzeigevorrichtung hat eine flexible Anzeigeschicht zur Wiedergabe mindestens eines ersten und eines zweiten Bildes sowie eine flexible optische Schicht, die auf der Anzeigeschicht angeordnet ist und die zur autostereoskopischen Erzeugung eines dreidimensionalen Bildes aus den ersten und zweiten Bildern ausgebildet ist.

Die ersten und zweiten Bilder zeigen zum Beispiel dasselbe Objekt aus leicht unterschiedlichen Winkeln. Die entsprechenden Bilddaten können als so genannte Stereodaten vorliegen. Es kann sich hierbei um Stereodaten handeln, die durch ein Aufnahmeverfahren von einem realen Objekt aufgenommen wurden oder um synthetische, das heißt durch Computerberechnung erzeugte Stereodaten. Im letzteren Falle können die Stereodaten durch Vorausberechnung oder in Echtzeit gewonnen werden.

Die vorliegende Erfindung ist besonders vorteilhaft, da sowohl die Anzeigeschicht als auch die darüber angeordnete optische Schicht flexibel sind. Dies ermöglicht eine Ausbildung der Anzeigevorrichtung in flexibler Bauform, wie z.B. in der Form einer flexiblen Folie. Hierfür geeignete Anzeigeschichten sind erfindungsgemäß als LED-Anzeige, insbesondere OLED-Anzeige, als Drehelementanzeige, als elektrochrome Anzeige und/oder als elektrophoretische Anzeige ausgebildet.

Nach einer Ausführungsform der Erfindung ist die Anzeigeschicht der Anzeigevorrichtung als Light Emitting Diode (LED) Anzeige ausgebildet. Vorzugsweise handelt es sich um eine Organic Light Emitting Diode (OLED) Anzeige, die zum Beispiel auf eine flexible Trägefolie aufgedruckt ist. Eine weitere bevorzugte Ausführungsform ist eine so genannte Hybrid-LED, bei der sowohl anorganische wie organische Materialien verwendet werden.

Beispielsweise kann die Anzeigeschicht als OLED-Display-Folie ausgebildet sein. Die Herstellung solcher OLED-Display-Folien ist an sich aus dem Stand der Technik bekannt und basiert beispielsweise auf der Low Temperature Polysilicon (LTPS)-Technik (vgl. hierzu http://www.sharpsma.com/lcd/lcdguide/Technologies/OLED displays.php). Es können aber auch andere polymerelektronische Verfahren zum Aufbringen, wie zum Beispiel zum Aufdrucken, der Anzeige auf einem flexiblen Träger eingesetzt werden.

Nach einer Ausführungsform der Erfindung ist die Anzeigeschicht als so genannte Drehelement-Anzeige ausgebildet. Drehelement-Anzeigen sind an sich aus dem Stand der Technik bekannt und beinhalten drehbare Elemente, wie etwa Zylinder, Polyeder oder Kugeln. Diese drehbaren Elemente sind typischerweise in einem Substrat eingebettet und ein geringer Zwischenraum zwischen jedem drehbaren Element und dem Substrat ist mit einer Flüssigkeit gefüllt, so dass sich die Elemente in einem sich verändernden elektrischen Feld frei drehen, aber nicht von einem Ort zum andern wandern können.

Wenn zum Beispiel eine Halbkugel eines drehbaren Elements schwarz ist und die andere weiß ist, kann jeder Bildpunkt durch das an dieser Stelle angelegte elektrische Feld an- und ausgeschaltet werden. Mit Hilfe einer Drehelement-Anzeige lässt sich insbesondere so genanntes elektronisches Papier, das auch als E-Paper bezeichnet wird, realisieren.

Ausführungsformen von Drehelement-Anzeigen, die auf der Drehung von Teilchen aufgrund eines elektrischen Feldes basieren, sind unter anderem bekannt aus US 4,126,854; US 4,143,103; WO 03/083 561 A2; US 4,438,160; US 5,389,945; US 5,825,529; EP 0 913 803 A2; EP 0 942 405 A2; EP 1 005 008 A2 und EP 0 994 456 B1.

Ferner ist aus der US 6,753,999 B2 ein Anzeigesystem bekannt geworden, bei dem die Bewegung der Anzeigeelemente aufgrund von Elektrophorese erfolgt. Aus Lawrence, L.L. "A Magnetic-Particles Display", IEEE Transactions on Electronic Devices, 22,1975, 758 ist ein Anzeigesystem bekannt geworden, bei dem magnetische Partikel aufgrund eines magnetischen Feldes in eine Anzeigeposition gedreht werden.

Nach einer Ausführungsform der Erfindung ist die Anzeigeschicht als elektrochromes oder elektrophoretisches Display ausgebildet.

Nach einer Ausführungsform der Erfindung ist die Anzeigeschicht als Aktiv-Matrix oder als Passiv-Matrix ausgebildet. Anstelle einer Matrix von getrennt ansteuerbaren Bildpunkten kann die Anzeigeschicht auch zum Beispiel durch Aufdruck eines lichtemittierenden Polymers erzeugt werden, welches nur insgesamt zur Wiedergabe eines fest vorgegebenen Bildes ansteuerbar ist.

Eine weitere Ausführungsform verwendet eine vollflächige Kontaktierung der Elektroden des Displays ohne die Ausführung als Matrix. Da auf diese Weise keine gezielte Ansteuerung der Bildpunkte möglich ist, werden die Bildinformation entweder aufbauend, zum, Beispiel drucktechnisch, oder destruktiv, zum Beispiel mittels Laser-Personalisierung, eingebracht. Dieses hat den Vorteil, dass eine spätere Manipulation der eingebrachten Daten faktisch nicht mehr möglich ist. Des weiteren benötigt ein solcher Aufbau keinen zusätzlich Treiber für die Aktiv-Matrix, was die Integration in ein Dokument erleichtert.

Nach einer Ausführungsform der Erfindung weist die optische Schicht eine Barriere-Struktur auf. Hierbei kann es sich zum Beispiel um eine Barriere-Maske oder ein Barriere-Gitter handeln, welches starr oder dynamisch ausgebildet sein kann.

Nach einer Ausführungsform der Erfindung hat die optische Schicht eine Vielzahl von optischen Linsen, insbesondere eine Matrix sphärischer Linsen oder halbkugelförmiger Linsen zur Realisierung eines so genannten Integral-Verfahrens.

Nach einer Ausführungsform der Erfindung hat die optische Schicht holographische oder optische Mikrostrukturen zur autostereoskopischen Erzeugung des dreidimensionalen Bildeindrucks.

Nach einer Ausführungsform der Erfindung hat die optische Schicht eine lentikulare Struktur, wie zum Beispiel linienförmig nebeneinander angeordnete plano-konvexe zylindrische Linsen, das heißt so genannten "Lentikulars".

Nach einer Ausführungsform der Erfindung ist die Anzeigevorrichtung zur Erzeugung einer Vielzahl von autostereoskopischen Bildern zur Betrachtung eines abgebildeten Objekts aus verschiedenen Blickwinkeln ausgebildet.

Nach einer Ausführungsform der Erfindung ist die optische Schicht schaltbar ausgebildet, um zum Beispiel den autostereoskopischen 3D-Effekt der Bildwiedergabe ein- oder ausschalten zu können.

Nach einer Ausführungsform der Erfindung weist die optische Schicht zumindest ein Formgedächtniselement aus einer so genannten Formgedächtnislegierung auf. Durch Auslösung des Formgedächtniseffekts erfährt die optische Schicht eine Formänderung aufgrund derer die autostereoskopische Bildwiedergabe ein- bzw. ausgeschaltet wird.

Beispielsweise hat die optische Schicht optische Elemente, wie zum Beispiel Linsen, deren Linsenradius durch Auslösung des Formgedächtniseffekts variiert wird. Die Linsen können dabei selbst aus einer Formgedächtnislegierung bestehen oder durch ein oder mehrere separate Formgedächtniselemente der optischen Schicht elastisch verformt werden.

Dabei kann es sich um eine Formgedächtnislegierung handeln, deren Formänderung Temperatur, Strahlungs- oder durch ein elektrisches oder magnetisches Feld induzierbar ist.

Nach einer Ausführungsform der Erfindung beinhaltet die optische Schicht ein piezoelektrisches Element. Durch Ansteuerung des piezo-elektrischen Elements erfährt die optische Schicht eine Formänderung, um zum Beispiel den 3D-Effekt ein- bzw. auszuschalten. Beispielsweise weist die optische Schicht optische Elemente, wie zum Beispiel Linsen auf, die aus einem piezo-elektrischen Material, vorzugsweise einem piezoelektrischen Polymer bestehen. Durch Auslösung des piezoelektrischen Effekts mit Hilfe eines entsprechenden Steuersignals verändern die optischen Elemente, das heißt beispielsweise die Linsen, ihre Form so, dass der 3D-Effekt ein- oder ausgeschaltet wird.

Nach einer Ausführungsform der Erfindung ist die optische Schicht selbst als weitere Anzeigeschicht ausgebildet. Zur Realisierung der weiteren Anzeigeschicht können dieselben oder ähnliche Technologien, die zur Realisierung der Anzeigeschicht für die Bildwiedergabe verwendet werden. Insbesondere kann die optische Schicht als elektrochrome oder flüssigkristalline Anzeige ausgebildet sein, Ein Drehelementanzeigeelement kann verwendet werden, wenn dieses zwischen einem transparenten und einem absorbierenden Zustand geschaltet werden kann. Beispielsweise werden auf der Anzeigschicht, durch welche die optische Schicht gebildet wird, Barriere-Linien oder ein Barriere-Gitter angezeigt.

Nach einer Ausführungsform der Erfindung hat die Anzeigevorrichtung einen elektronischen Speicher zur Speicherung von Bilddaten für die Wiedergabe der zumindest ersten und zweiten Bilder auf der flexiblen Anzeigeschicht. Bei den Bilddaten handelt es sich um ein oder mehrere Stereobilddatensätze.

Nach einer Ausführungsform der Erfindung hat die Anzeigevorrichtung einen integrierten elektronischen Schaltkreis zur Durchführung eines kryptographischen Protokolls, um den elektronischen Speicher vor unerlaubten Zugriffen zu schützen.

Nach einer Ausführungsform der Erfindung hat die Anzeigevorrichtung eine Energiequelle, wie zum Beispiel eine Batterie, eine Solarzelle oder ein thermoelektrisches Element, wie z.B. eine Seebeck- oder Peltier-Element.

Nach einer Ausführungsform der Erfindung ist die Anzeigevorrichtung für eine externe Energieversorgung ausgebildet, wie zum Beispiel über eine kontaktbehaftete und / oder eine kontaktlose Schnittstelle. Beispielsweise kann die Schnittstelle eine Antenne aufweisen, wobei die Energieversorgung durch über die Antenne empfangene Funksignale erfolgt. Alternativ oder zusätzlich kann die Anzeigevorrichtung eine Induktionsspule aufweisen, um induktiv mit Energie versorgt zu werden.

Nach einer Ausführungsform der Erfindung ist die Anzeigevorrichtung als RFID Transponder ausgebildet oder mit einem solchen verbunden. In diesem Fall kann der RFID Transponder als Energiequelle für die Anzeigevorrichtung dienen.

Nach einer Ausführungsform der Erfindung trägt die Anzeigevorrichtung eine zusätzliche zweidimensionale Darstellung des dreidimensionalen Bildes. Diese zweidimensionale Darstellung kann zum Beispiel auf der Anzeigevorrichtung aufgedruckt sein oder mit Hilfe einer weiteren separaten Anzeige, die ohne Energieversorgung auskommt, dargestellt werden. Dies hat den Vorteil, dass auch dann eine Darstellung des Bildes erfolgt, wenn keine Energieversorgung zur Verfügung steht. Durch die Vergleichsmöglichkeit der zweidimensionalen Darstellung mit der dreidimensionalen Bilddarstellung ist ferner ein weiteres Sicherheitsmerkmal gegeben.

Nach einer Ausführungsform der Erfindung dient eine erfindungsgemäße Anzeigevorrichtung zur Realisierung eines Dokuments. Dabei kann das Dokument durch die Anzeigevorrichtung selbst gebildet werden oder die Anzeigevorrichtung kann in ein Dokument integriert sein. Bei dem Dokument kann es sich zum Beispiel um ein Wert-, Sicherheits- oder Identifikationsdokument handeln, wie zum Beispiel eine Identifikationskarte, Reisepass, Personalausweis, Führerschein, Kreditkarte, Kundenausweis oder Fahrausweis. Insbesondere kann das Dokument als Chipkarte ausgebildet sein.

Nach einer Ausführungsform der Erfindung ist die erfindungsgemäße Anzeigevorrichtung in ein tragbares elektronisches Gerät integriert, wie zum Beispiel in ein so genanntes elektronisches Buch (E-Book), ein mobiles Telekommunikationsgerät, wie zum Beispiel ein Mobiltelefon, Smart Phone oder dergleichen, einen tragbaren Computer oder einen Personal Digital Assistant (PDA).

Vorzugsweise hat das elektronische Gerät einen Stauraum, wobei die Anzeigevorrichtung in eine Stauposition innerhalb des Stauraums einrollbar ist. Dadurch kann ein tragbares elektronisches Gerät geschaffen werden, welches die autostereoskopische Bildwiedergabe bei gleichzeitig besonders kompakter Bauweise ermöglicht.

Im weiteren werden bevorzugte Ausführungsformen der Erfindung mit Bezugnahme auf die Zeichnungen näher erläutert. Es zeigen:
- Figur 1: ein Blockdiagramm einer Ausführungsform einer erfindungsgemäßen Anzeigevorrichtung,
- Figur 2: eine Chipkarte mit einer Ausführungsform einer erfindungsgemäßen Anzeigevorrichtung bei ausgeschaltetem 3D-Effekt,
- Figur 3: die Chipkarte der Figur 2 bei eingeschaltetem 3D-Effekt,
- Figur 4: eine Ausführungsform einer erfindungsgemäßen Anzeigevorrichtung mit Lentikulars,
- Figur 5: eine Ausführungsform einer erfindungsgemäßen Anzeigevorrichtung mit einem Linienraster,
- Figur 6: einer Ausführungsform einer erfindungsgemäßen Vorrichtung mit einer optisch aktiven Folie,
- Figur 7: eine Ausführungsform einer erfindungsgemäßen Vorrichtung mit einer holographischen Folie,
- Figur 8: eine Ausführungsform einer erfindungsgemäßen Vorrichtung mit optischen Elementen in einem ersten Zustand,
- Figur 9: die Ausführungsform der Figur 8, wenn die optischen Elemente in einem zweiten Zustand vorliegen,
- Figur 10: eine Ausführungsform einer erfindungsgemäßen Vorrichtung mit zum Beispiel elektrochromen Materialien zur schaltbaren Erzeugung von Linien- oder optischen Mikrostrukturen im transparenten Zustand,
- Figur 11: die Ausführungsform der Figur 10 im nicht transparentem Zustand,
- Figur 12: ein Blockdiagramm einer Ausführungsform eines erfindungsgemäßen Dokuments mit einem Lesegerät,
- Figur 13: eine Ausführungsform eines erfindungsgemäßen tragbaren elektronischen Geräts in geschlossenem Zustand,
- Figur 14: das elektronische Gerät der Figur 13 in geöffnetem Zustand.

In der nachfolgenden Figurenbeschreibung werden einander entsprechende Elemente mit entsprechenden Bezugszeichen gekennzeichnet.

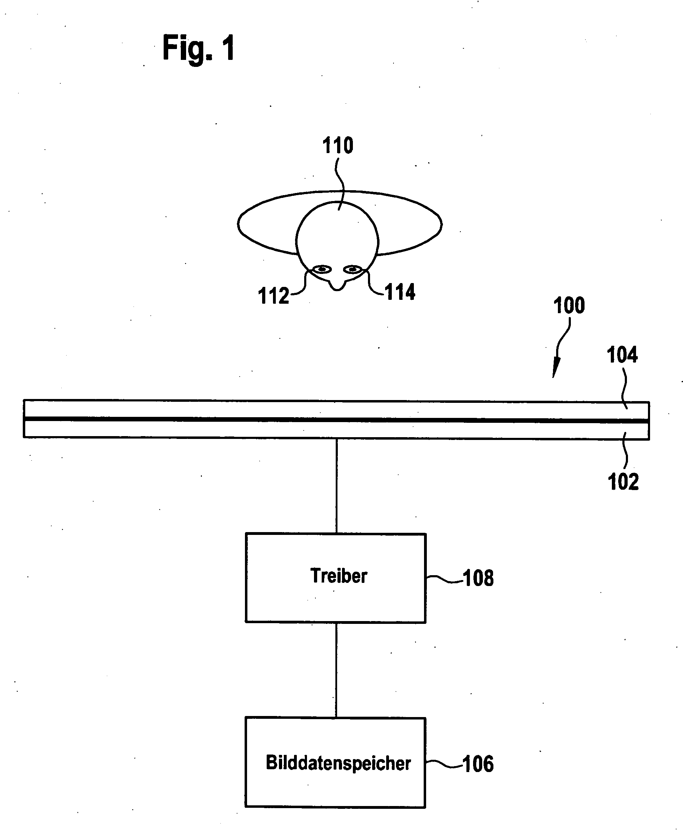

Die Figur 1 zeigt eine Anzeigevorrichtung 100. Die Anzeigevorrichtung 100 hat eine flexible Anzeigeschicht 102 auf der ein flexible optische Schicht 104 angeordnet ist. Die Anzeigeschicht 102 und die optische Schicht 104 sind vorzugsweise fest miteinander verbunden. Sowohl die Anzeigeschicht 102 als auch die optische Schicht 104 sind vorzugsweise in flexibler Bauweise, so dass auch die resultierende Einheit aus der Anzeigeschicht 102 und der optischen Schicht 104 flexibel ist.

Bei der Anzeigeschicht 102 handelt es sich vorzugsweise um eine flexible OLED-Folie, eine als flexible Folie realisierte Drehelementanzeige, ein bistabiles elektrophoretisches Display, ein elektrophoretisches Display oder eine andere Displaytechnologie.

Die Anzeigeschicht 102 kann als Aktiv- oder Passiv-Matrix mit separat ansteuerbaren Bildelementen ausgebildet sein. Die Anzeigeschicht 102 kann aber auch durch ein auf einem flexiblen Träger aufgebrachtes Display gebildet werden, welches keine einzeln ansteuerbaren Bildpunkte beinhaltet, sondern nur insgesamt ein- oder ausgeschaltet werden kann, um eine fest vorgegebene Bildinformation darzustellen. Bevorzugt handelt es sich hierbei um ein drucktechnisch hergestelltes Display auf OLED-Basis. Dieses kann durch entweder aufbauend durch gezielten Druck nur der benötigten Bildpunkte oder destruktiv durch gezielte Zerstörung einzelner Bildelemente, zum Beispiel mittels eines Lasers, personalisiert sein.

Ferner ist es auch möglich, dass die Anzeigeschicht 102 ein mittels einer Druckfarbe aufgedrucktes Bild beinhaltet, oder dass ein solches Bild auf der optischen Schicht 104 aufgedruckt ist oder auf einer unterhalb der Anzeigeschicht 102 befindlichen Schicht (in der Figur 1 nicht dargestellt). In diesem Fall wird erfindungsgemäß ein Display auf OLED Basis bevorzugt, da das vom Display emittierte Licht im eingeschalteten Zustand das vom gedruckten Bild diffus reflektierte überstrahlt und somit nur noch das auf dem Display dargestellte Bild sichtbar ist.

Die Anzeigeschicht 102 dient zur Wiedergabe von zumindest ersten und zweiten Bildern, welche die Grundlage für die autostereoskopische Bilderzeugung durch die optische Schicht 104 bilden. Hierzu weist die optische Schicht 104 beispielsweise starre oder dynamische Paralax-Barrieren, Lentikulars, eine Linsenmatrix von sphärischen oder halbkugelförmigen Linsen und / oder andere hologprahische oder optische Mikrostrukturen für die autostereoskopische Erzeugung eines dreidimensionalen Bildes aus den zumindest ersten und zweiten Bildern, die von der Anzeigeschicht wiedergegeben werden, auf.

Die optische Schicht 104 kann selbst durch eine weitere flexible Anzeigeschicht realisiert werden, wie zum Beispiel durch eine elektrochrome Anzeige, eine Drehelement-Anzeige, ein bistabiles elektrophoretisches Display, ein bistabiles flüssigkristallines Display oder eine andere E-Paper-Technologie, welche über einen transparenten und einen nicht transparenten Zustand verfügt. Durch die die optische Schicht 104 bildende Anzeige werden zum Beispiel Paralax-Barrieren angezeigt. Dabei ist eine Ausbildung der optischen Schicht 104 als bistabile Anzeige besonders vorteilhaft, da dann die gewünschte optische Struktur ohne ständige Energiezufuhr angezeigt werden kann.

In der hier betrachteten Ausführungsform mit einem Aktiv- oder Passiv-Matrix-Display hat die Anzeigevorrichtung 100 einen Bilddatenspeicher 106, in dem Bilddaten für die Wiedergabe von zumindest einem ersten und zweiten Bild gespeichert sind. Die entsprechenden Bild-Stereodaten können dabei durch ein stereoskopisches Verfahren von einem realen Objekt aufgenommen werden, wie zum Beispiel durch die Aufnahme verschiedener Bilder desselben Objekts aus leicht unterschiedlichen Richtungen. Auf die in dem Bildspeicher 106 gespeicherten Stereodaten greift ein Treiber 108 zu, der die Anzeigeschicht 102 entsprechend zur Wiedergabe der ersten und zweiten Bilder ansteuert. Aufgrund der optischen Schicht 104 nimmt ein Benutzer 110 beispielsweise mit seinem rechten Auge 112 das erste Bild und mit seinem linken Auge 114 das zweite Bild war, so dass der 3D-Effekt resultiert.

Wenn zum Beispiel unterhalb der Anzeigeschicht 102 ein zweidimensionales Bild zum Beispiel auf einen flexiblen Träger aufgedruckt ist, ist es nicht unbedingt erforderlich, dass in dem Bilddatenspeicher Stereobilder gespeichert sind. In diesem Fall wird zum Beispiel durch das fest auf dem Träger aufgedruckte Bild das erste Bild und durch ein zusätzlich von der Anzeigeschicht 102 wiedergegebenes Bild das zweite Bild für die autostereoskopische Erzeugung des 3D-Effekts wiedergegeben.

Durch die Anzeigevorrichtung 100 kann beispielsweise ein E-Paper gebildet werden, auf dem autostereoskopisch dreidimensionale Bilddaten wiedergegeben werden können. Ferner kann durch die Anzeigevorrichtung 100 ein Dokument gebildet werden, wie zum Beispiel ein Wert-, Sicherheits- oder Identifikationsdokument. Alternativ kann die Anzeigevorrichtung 100 in ein solches Dokument integriert sein. Insbesondere kann die Anzeigevorrichtung 100 in eine Chipkarte integriert sein.

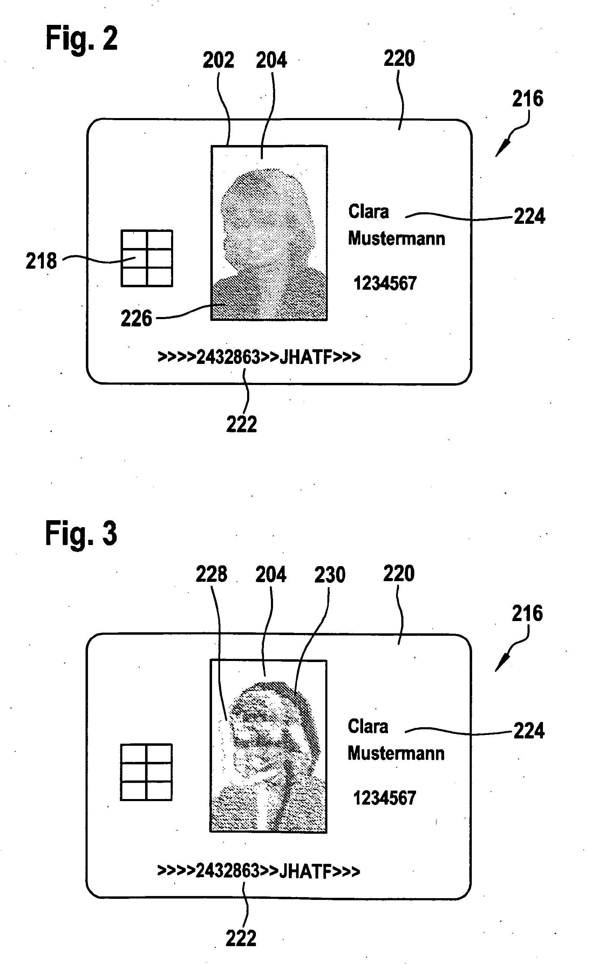

Die Figur 2 zeigt eine Chipkarte 216, das heißt beispielsweise eine so genannte Smart Card. Die Chipkarte 216 hat ein Chipmodul 218, welches zumindest einen integrierten elektronischen Schaltkreis beinhaltet. Das Chipmodul 218 kann eine kontaktbehaftete, kontaktlose oder eine so genannte Dual-Interface-Schnittstelle aufweisen. Das Chipmodul 218 ist zum Beispiel in einer Kavität des Kartenkörpers 220 eingebettet.

Der Kartenkörper 220 hat zum Beispiel eine weitere Kavität, in der sich die Anzeigeschicht 202 mit der darüber liegenden optischen Schicht 204 befindet. Die Ansteuerung der Anzeigeschicht 202 und/oder der optischen Schicht 204 kann durch den integrierten elektronischen Schaltkreis des Chipmoduls 218 erfolgen; alternativ ist die Anzeigevorrichtung in einer entsprechenden Kavität der Chipkarte 216 als vollständig separate Einheit ausgebildet, die unabhängig von dem Chipmodul 218 funktioniert, und ihren eigenen Treiber und Bilddatenspeicher aufweist.

Vorzugsweise erfolgt zumindest die Energieversorgung der Anzeigevorrichtung von dem Chipmodul 218, da dieses über seine Schnittstelle mit einer externen Energieversorgung verbindbar ist.

Auf dem Kartenkörper 220 kann eine maschinenlesbare Zeile 222 sowie Textinformation 224 aufgedruckt sein.

In der Ausführungsform der Figur 2 ist unterhalb oder oberhalb der Anzeigeschicht ein Bild 226 aufgedruckt. Das Bild 226 ist auch dann zu sehen, wenn die Anzeigeschicht 202 ausgeschaltet ist.

Die Figur 3 zeigt die Chipkarte 216, wenn die Anzeigevorrichtung eingeschaltet ist. In diesem Fall wird durch die Anzeigevorrichtung wenigstens ein erstes Bild 228 und ein zweites Bild 230 wiedergegeben, so dass aufgrund der optischen Schicht 204 der autostereoskopische 3D-Effekt resultiert. Zum Beispiel wird bei Verwendung einer Anzeigeschicht 202 auf OLED-Basis aufgrund der Leuchtkraft dabei das Bild 226 weitgehend unsichtbar. Alternativ kann bei relativ geringer Leuchtkraft der Anzeigeschicht 202 auch nur eines der Bilder 228 oder 230 von der Anzeigevorrichtung wiedergegeben werden, wobei in diesem Fall der autostereoskopische dreidimensionale Effekt durch das gedruckte Bild 226 und das eine von der Anzeigeschicht wiedergegebene Bild 228 oder 230 resultiert.

Die Anzeigeschicht 202 bzw. die darüber befindliche optische Schicht 204 haben vorzugsweise in etwa die Größe eines Passfotos, das heißt etwa 3,5 cm x 4,5 cm.

In der Ausführungsform der Figuren 2 und 3 kann die Anzeigeschicht 202 durch eine Aktiv-Matrix, eine Passiv-Matrix oder durch eine Flächenelektrode realisiert sein. Insbesondere kann das wiederzugebende Bild zum Beispiel drucktechnisch durch ein leuchtfähiges Polymer in oder auf die Anzeigeschicht 202 aufgedruckt sein. Letzteres bildet eine besonders wirksame Maßnahme zum Fälschungsschutz, da eine solche als Ganzes gedruckte Fläche auf elektronischem Wege nicht modifizierbar ist.

Eine solche Fläche kann beispielsweise durch Drucken der einzelnen kontrastgebenden Bildelemente des wiederzugebenden Bildes hergestellt werden, so dass nur die für eine Darstellung des gewünschten Bildes notwendigen Bildelemente auf das Dokument aufgebracht werden. Alternativ erfolgt die Herstellung durch Drucken oder Integration eines vollflächigen Displays analog einem Matrix-Display. Durch einen anschließenden Personalisierungsschritt werden einzelne Bildelemente des Displays destruktiv verändert und somit das gewünschte Bild erzeugt, indem nur noch die für die Darstellung des gewünschten Bildes notwendigen Bildelemente Licht zu emittieren in der Lage sind. Ein solches Display hat insbesondere den Vorteil, dass die Chipkarte 216 als nicht individualisierter Rohling hergestellt werden kann, und das anschließend in einem zentralen oder dezentralen Prozess bei Bedarf personalisiert wird. Dies reduziert die Kosten und verkürzt die Zeit zur Erstellung einer individualisierten Chipkarte.

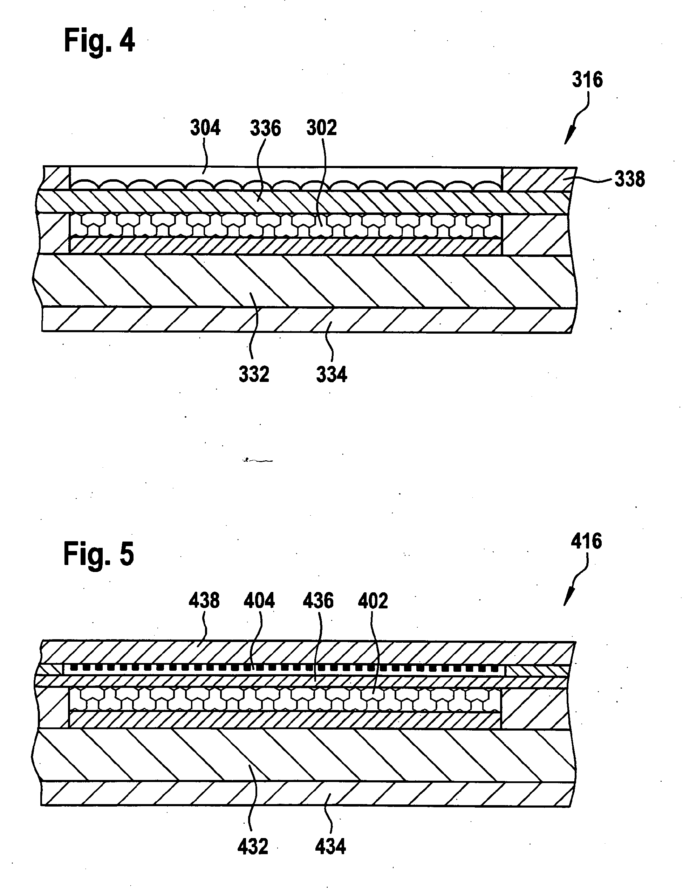

Die Figur 4 zeigt einen Querschnitt einer weiteren Ausführungsform einer Chipkarte 316. Die Chipkarte 316 hat ein Karteninlay 332 mit einer unteren Deckschicht 334 für den Kartenkörper. Auf dem Karteninlay 332 befindet sich die Anzeigeschicht 302, welche beispielsweise eine Rück- und Gegenelektrode aufweisen kann. Auf der Anzeigeschicht 302 befindet sich eine Trennschicht 336. Wenn die Anzeigeschicht 302 in OLED-Technologie realisiert ist, bildet die Trennschicht 336 eine Diffusionssperrschicht, um eine Zerstörung der OLEDs durch zum Beispiel eindiffundierenden Sauerstoff und Wasser zu verhindern.

Auf der Trennschicht 336 ist eine Deckschicht 338 angeordnet, die in einem Bereich 304 als eine optische Schicht ausgebildet ist, welche zum Beispiel ein eingeprägtes Linsenraster oder Linsenarray aufweist.

Die Anzeigeschicht 302 ist in der hier betrachten Ausführungsform beispielsweise als OLED oder bistabiles Display, bevorzugt auf Basis elektrochromer Systeme, rotierender Sphären oder elektrophoretischer Partikel ausgebildet.

In dem Bereich 304 der Deckschicht 338 kann es sich um Lentikularlinsen, ein sphärisches oder hexagonales Linsensraster, Linienraster oder eine andere holographische oder optische Mikrostruktur handeln. Die optische Schicht kann dabei in die Deckschicht 338 geprägt oder auf die Deckschicht 338 aufgebracht sein.

Die Figur 5 zeigt eine Ausführungsform einer Chipkarte 416, bei der die optische Schicht 404 zwischen der Deckschicht 438 und der Trennschicht 436 angeordnet ist. In der hier betrachteten Ausführungsform beinhaltet die optische Schicht 404 Paralax-Barrieren. Die optische Schicht 404 kann schaltbar sein, und beispielsweise als weitere Anzeige, insbesondere als elektrochromes Display realisiert sein. In einer besonders bevorzugten Ausführungsform sind beide Anzeigelemente 402 und 404 von gleicher Displaytechnologie, zum Beispiel elektrochrome Displays.

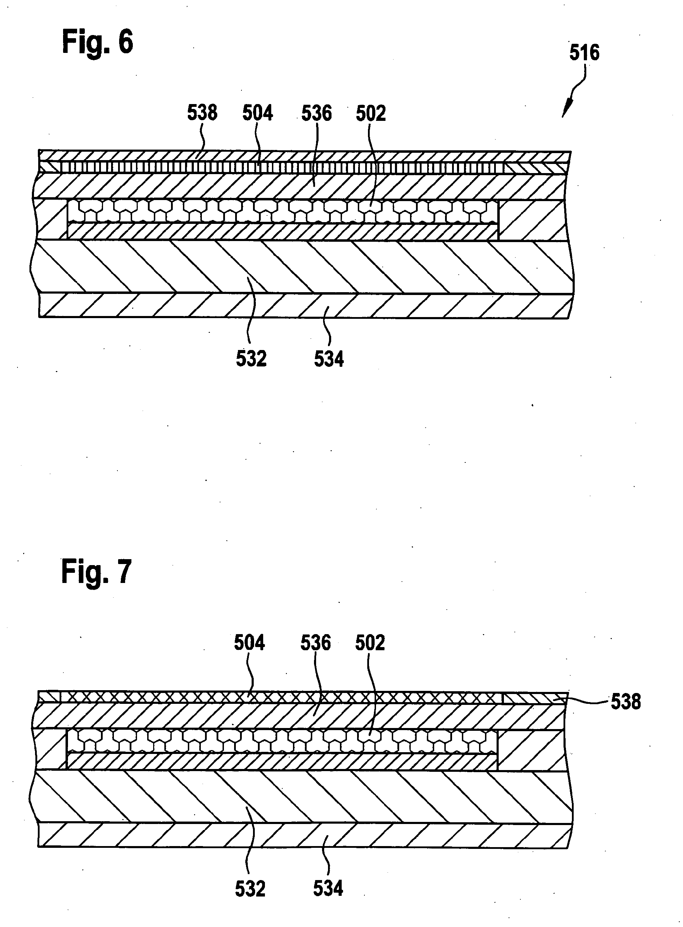

Die Figur 6 zeigt eine Ausführungsform einer Chipkarte 516, bei der die optische Schicht 504 als Lentikularlinsen, sphärisches oder hexagonales Linsensraster, Linienraster beziehungsweise als holographische oder optische Mikrostruktur ausgebildet ist, welche zwischen der Deckschicht 538 und der Trennschicht 536 angeordnet ist. Alternativ kann sich die optische Schicht 504 auch auf der Deckschicht 538 befinden oder einen integralen Bestandteil der Deckschicht 538 bilden, wie dies in der Figur 7 dargestellt ist.

Die optischen Schichten der hier betrachteten Ausführungsformen können starr, dynamisch oder schaltbar ausgebildet sein. Eine dynamische bzw. schaltbare optische Schicht kann durch ein weiteres Anzeigeelement realisiert sein oder durch schaltbare optische Elemente, die zum Beispiel aufgrund eines Steuerungsimpulses ihre Form ändern können. Eine solche Formänderung kann beispielsweise aufgrund eines Formgedächtniseffekts oder aufgrund eines piezo-elektrischen Effekts erfolgen. Die Auslösung des Formgedächtniseffekts kann dabei durch eine Temperaturänderung, durch Strahlung, oder durch ein elektrisches oder magnetisches Feld induziert werden.

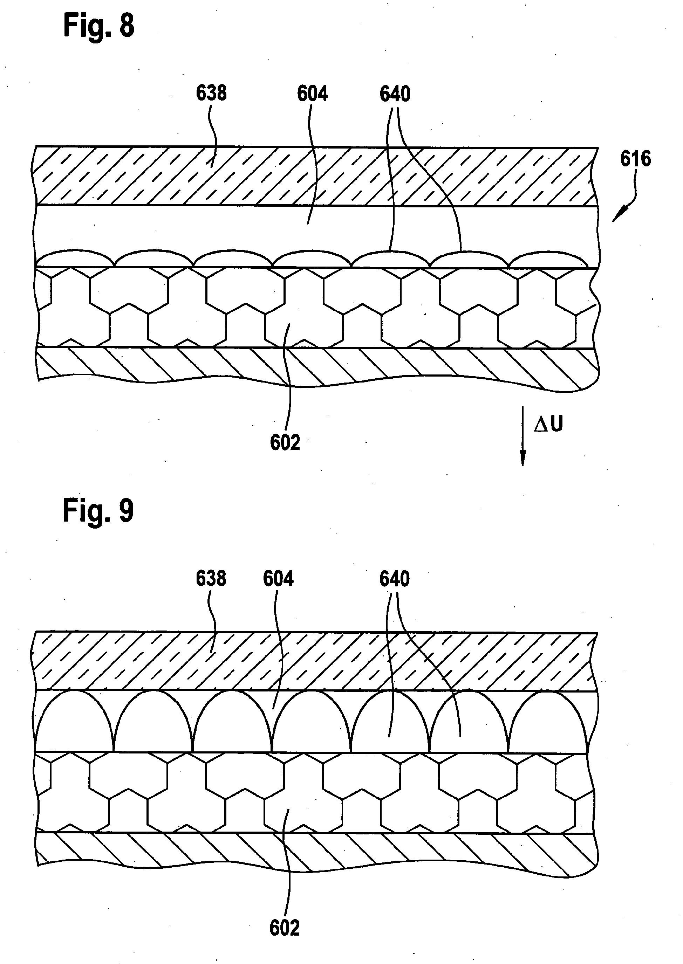

Die Figur 8 zeigt eine Chipkarte 616 mit einer optischen Schicht 604, die sich zwischen einer Deckschicht 638 und einer Anzeigeschicht 602 befindet. Die optische Schicht 604 hat mehrere Linsen 640, die in einem Raster oder einer Matrix angeordnet sind. Die Linsen 640 sind schaltbar, das heißt, die Form der Linsen kann durch ein entsprechendes Steuersignal so verändert werden, dass der dreidimensionale Effekt der Bilddarstellung ein- bzw. ausgeschaltet wird.

Die Figur 8 zeigt die Linsen 640 in einem bevorzugt ungeschalteten, entspannten Zustand, bei dem die Linsen 640 nur einen geringen Krümmungsradius aufweisen. Aufgrund eines Steuersignals gehen die Linsen 640 in einen verformten Zustand über, der in der Figur 9 dargestellt ist. In dem verformten Zustand haben die Linsen eine größere Krümmung als in dem entspannten Zustand, so dass sich der autostereoskopische dreidimensionale Effekt einstellt. Das Linsensystem kann auch so ausgebildet sein, dass im ungeschalteten, entspannten Zustand eine dreidimensionale Darstellung erfolgt. Des weiteren kann auch in beiden Zuständen eine dreidimensionale Darstellung erfolgen, wobei jedoch die Darstellung in verschiedenen Abständen vom Display sichtbar ist. Auf diese Weise kann zum Beispiel zwischen der Beobachtung durch einen Betrachter / Kontrolleur auf einen Multi-User-Betrieb umgeschaltet werden. Die Linsen 640 können zum Beispiel aus einer Formgedächtnislegierung bestehen, wobei durch das Steuersignal der Formgedächtniseffekt ausgelöst wird. Durch das Steuersignal wird zum Beispiel ein Stromkreis geschlossen, der zur Erwärmung der Linsen 640 führt, so dass diese in eine Hochtemperaturform übergehen, wie in der Figur 9 dargestellt. Alternativ oder zusätzlich kann die Auslösung des Formgedächtniseffekts auch durch eine externe Strahlungsquelle oder durch Anlegen eines elektrischen oder magnetischen Feldes ausgelöst werden.

Alternativ bestehen die Linsen 640 aus einem Polymer, welches piezoelektrische Eigenschaften hat. Durch Anlegen einer elektrischen Spannung an die Linsen 640 verformen sich diese dann aufgrund des piezoelektrischen Effekts in die in der Figur 9 gezeigte Form.

Ferner ist es auch möglich, dass nicht die Linsen 640 selbst unmittelbar zum Beispiel aufgrund eines Formgedächtnis- oder piezo-elektrischen Effekts ansteuerbar sind, sondern dass in der Chipkarte 616 ein oder mehrere Aktuatoren angeordnet sind, die durch ein Steuersignal angesteuert werden können, um zum Beispiel eine Kraft auf die Linsen 640 auszuüben, so dass diese reversibel, plastisch verformt werden, wie in der Figur 9 dargestellt.

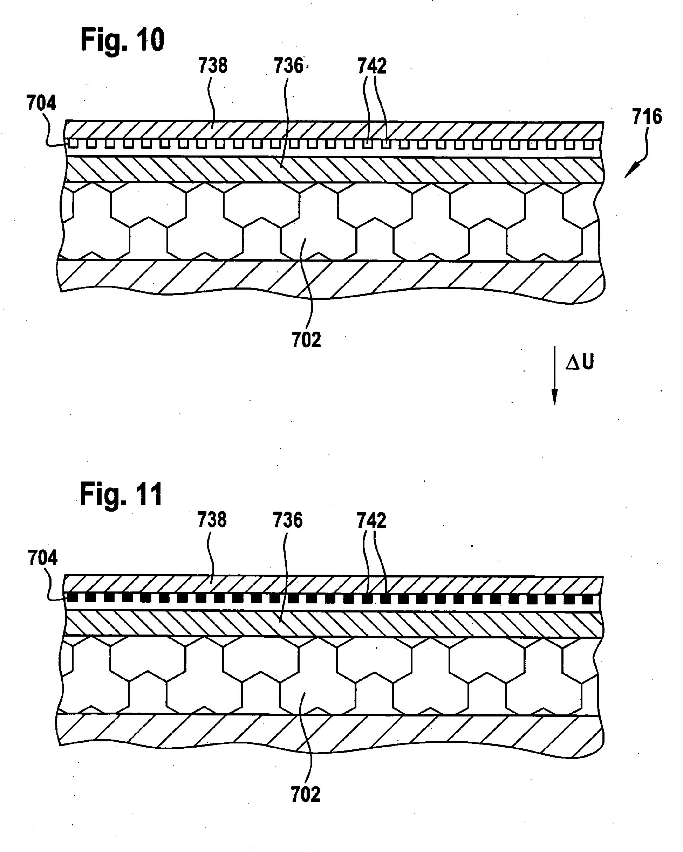

Die Figur 10 zeigt eine Chipkarte 716, bei der zwischen der Deckschicht 738 und der die Anzeigeschicht 702 überdeckenden Trennschicht 736 eine weitere Anzeige 704 angeordnet ist. Die Anzeigeschicht 704 dient zur Wiedergabe einer optischen Struktur, wie zum Beispiel eines Linienrasters, die den autostereoskopischen dreidimensionalen Effekt bewirkt. Beispielsweise handelt es sich bei der Anzeige 704 um ein elektrochromes System mit einer transparenten Elektrodenstruktur. Die Figur 10 zeigt die Anzeige 704 im ausgeschalteten Zustand, in dem die Linien 742 nicht oder fast nicht sichtbar sind.

Die Figur 11 zeigt die Anzeige 704 in eingeschaltetem Zustand. Im eingeschalteten Zustand werden die Linien 742 angezeigt, so dass der autostereoskopische dreidimensionale Effekt resultiert.

Bei der Anzeige 704 kann es sich zum Beispiel um eine OLED-Anzeige, eine Drehelement-Anzeige, ein bistabiles elektrophoretisches Display, ein elektrochromes Display oder dergleichen handeln. Vorzugsweise wird für die Anzeigeschicht 702 dieselbe oder eine ähnliche Technologie verwendet, die auch für die Anzeige 704 verwendet wird. Wenn es sich bei der Anzeigeschicht 702 zum Beispiel um eine aufgedrucktes elektrochromes Display handelt, so ist vorzugsweise die Anzeige 704 ebenfalls als gedrucktes elektrochromes Display ausgebildet.

Ein gemeinsamer Vorteil der oben genannten Ausführungsformen ist, dass die Anzeigeschicht mit ihrer optischen Schicht flexibel ist und beispielsweise folienartig ausgebildet ist. Dies eröffnet verschiedenste Anwendungsgebiete, wie zum Beispiel die Integration einer solchen folienartigen Anzeigenvorrichtung in ein Wert- oder Sicherheitsdokument, eine Chipkarte, in ein tragbares elektronisches Gerät oder auch die Verwendung als E-Paper.

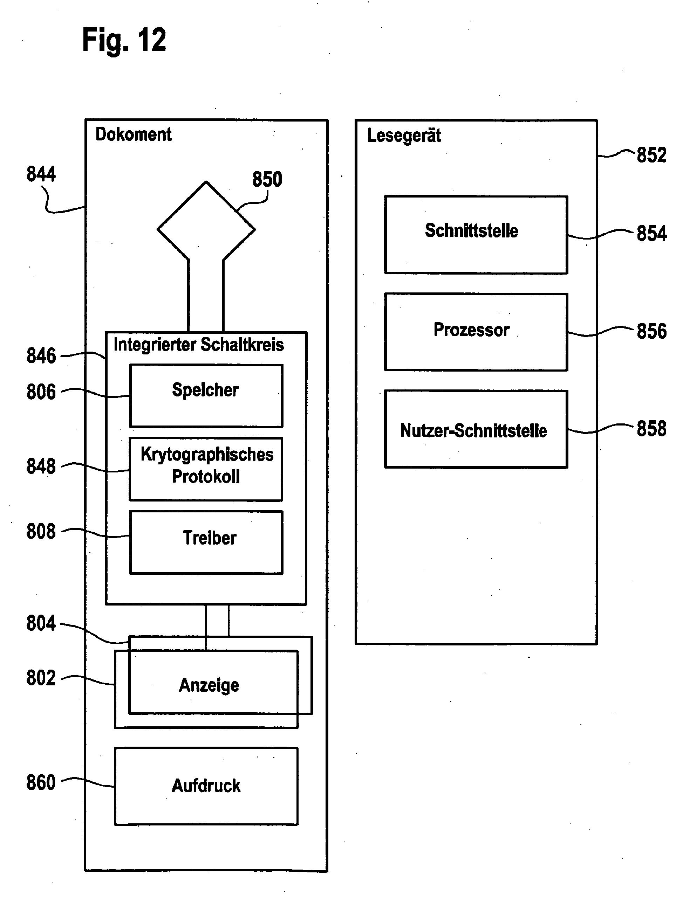

Die Figur 12 zeigt ein Blockdiagramm eines Dokuments 844. Bei dem Dokument 844 kann es sich beispielsweise um ein Wert- oder Sicherheitsdokument handeln, wie zum Beispiel eine Identifikationskarte, Reisepass, Personalausweis, Führerschein, Kreditkarte, Kundenausweis oder Fahrausweis. Das Dokument 844 kann dabei im wesentlichen aus Papier und / oder Kunststoff oder verschiedenen Papier- und / oder Kunststoffschichten bestehen. Ferner kann das Dokument 844 auch als so genannte Chipkarte ausgebildet sein, welche wiederum kontaktbehaftet, kontaktlos oder als Dual-Interface-Karte ausgebildet sein kann.

Das Dokument 844 hat einen integrierten elektronischen Schaltkreis 846, der einen nicht-flüchtigen elektronischen Speicher 806 beinhaltet. Der Speicher 806 dient zur Speicherung von Bilddaten, insbesondere von Stereobilddaten. Ferner kann der Speicher 806 zur Speicherung personen- und / oder objektbezogener Daten des Trägers des Dokuments 844 verwendet werden. Zum Schutz der Daten in dem Speicher 806 gegen unautorisierten Zugriff wird durch den integrierten elektronischen Schaltkreis 846 ein kryptographisches Protokoll 848 implementiert.

In das Dokument 844 ist eine Ausführungsform einer erfindungsgemäßen Anzeigevorrichtung integriert, die eine Anzeigeschicht 802 und eine schaltbare optische Schicht 804 aufweist. Die Anzeigeschicht 802 und die optische Schicht 804 werden von dem Treiber 808 des integrierten elektronischen Schaltkreises 846 angesteuert. Hierbei kann der elektronische Schaltkreis 846 aus einem Chip beziehungsweise Chipmodul, aus zwei oder mehr Chips beziehungsweise Chipmodulen bestehen, einer Kombination aus Chip beziehungsweise Chipmodul und gedruckter Elektronik oder ganz aus gedruckter Elektronik bestehen. Die optische Schicht 804 beinhaltet beispielsweise schaltbare optische Elemente, welche zum Beispiel einen Formgedächtniseffekt oder piezo-elektrischen Effekt aufweisen, der aufgrund eines von dem Treiber 808 abgegebenen Steuerimpulses auslösbar ist, so dass die optischen Elemente deren Form ändern können, oder eine weitere Anzeige, beispielsweise zur Anzeige von Barriere-Linien.

Der integrierte elektronische Schaltkreis 846 ist zum Beispiel in einer kontaktlosen Ausführungsform mit einer Antenne 850 verbunden. Der integrierte elektronische Schaltkreis 846 mit der Antenne 850 sind vorzugsweise in einer RFID-Technologie ausgebildet. Weitere Ausführungsformen können kontaktbehaftet oder als Dual-Interface Vorzugsweise hat das Dokument 844 keine eigene Stromversorgung für den integrierten elektronischen Schaltkreis 846 bzw. die Anzeigevorrichtung, sondern bezieht die Energie für den Betrieb des integrierten elektronischen Schaltkreises 846 bzw. der Anzeigevorrichtung zum Beispiel durch die Antenne 850 empfangene Funksignale. Bei dem integrierten elektronischen Schaltkreis 846 mit der Antenne 850 handelt es sich also beispielsweise um einen so genannten RFID-Transponder.

Es können auch andere kontaktbehaftete und / oder kontaktlose Schnittstellen, insbesondere so genannte Dual-Interface-Schnittstellen, eingesetzt werden, um den integrierten elektronischen Schaltkreis 846 und / oder die Anzeigevorrichtung mit Energie zu versorgen.

Beispielsweise erfolgt die Energieversorgung von einem Lesegerät 852 aus. Das Lesegerät 852 hat eine RFID-Schnittstelle 854 oder eine andere kontaktbehaftete und / oder kontaktlose Schnittstelle. In dem hier betrachteten Ausführungsbeispiel ist die RFID-Schnittstelle 854 zur Aussendung von RFID-Funksignalen und zum Empfangen von entsprechenden Antwortsignalen von der Antenne 850 ausgebildet. Das Lesegerät 852 hat einen Prozessor 856 zur Ausführung von Programminstruktionen, welche die Funktionsweise des Lesegeräts 852 steuern, sowie eine Nutzerschnittstelle 858, insbesondere eine graphische Nuterzschnittstelle.

Der Prozessor 856 dient zur Teilnahme an dem kryptographischen Protokoll 848, um beispielsweise auf die in dem Speicher 806 abgelegten Daten zugreifen zukönnen und / oder um einen Steuerimpuls des Treibers 808 auszulösen, um den autostereoskopischen 3D-Effekt ein- bzw. auszuschalten.

Das Dokument 844 kann einen zusätzlichen Aufdruck 860 tragen. Beispielsweise ist der Aufdruck 860 eine zweidimensionale Darstellung des bei eingeschalteter Anzeigevorrichtung wiedergegebenen dreidimensionalen Objekts. Zum Beispiel handelt es sich bei dem Aufdruck 860 um die Wiedergabe eines Passphotos. Dies hat den Vorteil, dass das Dokument 844 auch ohne das Lesegerät 852 verwendbar ist. Wenn das Lesegerät 852 zur Verfügung steht, ist durch den Aufdruck 860 ein weiteres Sicherheitsmerkmal gegeben, da der Aufdruck 860 auf Übereinstimmung mit der Wiedergabe der Anzeigevorrichtung 802, 804 visuell geprüft werden kann.

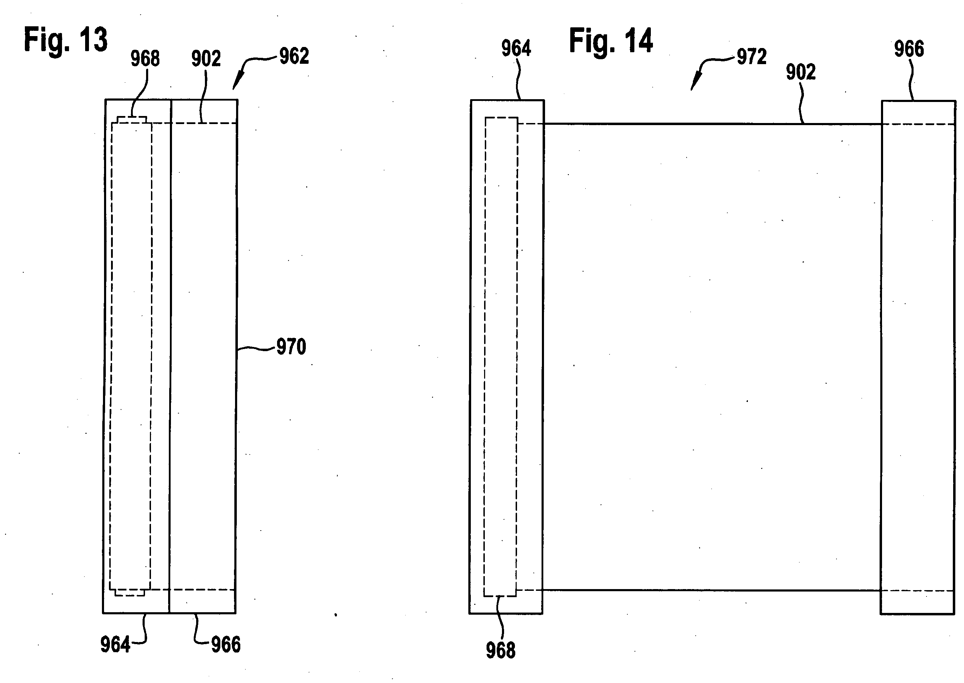

Die Figur 13 zeigt ein tragbares elektronisches Gerät 962. Das Gerät 962 hat ein Gehäuse, welches aus zwei Gehäuseteilen 964 und 966 besteht. Die Figur 13 zeigt das Gerät 962 bei geschlossenem Gehäuse.

Innerhalb des Gehäuseteils 964 ist eine Trommel 968 angeordnet, auf die eine erfindungsgemäße Anzeigeschicht 902 mit einer darauf befindlichen optischen Schicht, welche beispielsweise einer der oben beschriebenen Ausführungsformen entsprechen, aufgewickelt ist. Das andere Ende der Anzeigeschicht 902 bzw. der optischen Schicht ist mit einer Gehäusewandung 970 des Gehäuseteils 966 verbunden.

Das Gehäuse kann durch Auseinanderziehen der Gehäuseteile 964 und 966 geöffnet werden, wie dies in der Figur 14 dargestellt ist. Hierzu nimmt ein Benutzer beispielsweise das Gehäuseteil 964 in seine linke Hand und das Gehäuseteil 966 in seine rechte Hand und zieht dann die beiden Gehäuseteile auseinander, wobei sich die Anzeigeschicht 902 mit ihrer darauf befindlichen optischen Schicht von der Trommel 968 abwickelt. Dadurch entsteht eine relativ große Anzeigefläche 972 zwischen den auseinandergezogenen Gehäuseteilen 964 und 966.

### Bezugszeichenliste

- 100: Anzeigevorrichtung
- 102: Anzeigeschicht
- 104: optische Schicht
- 106: Bilddatenspeicher
- 108: Treiber
- 110: Benutzer
- 112: rechtes Auge
- 114: linkes Auge
- 202: Anzeigeschicht
- 204: optische Schicht
- 216: Chipkarte
- 218: Chipmodul
- 220: Kartenkörper
- 222: maschinenlesbare Zeile
- 224: Textinformation
- 226: Bild
- 228: Bild
- 230: Bild
- 302: Anzeigeschicht
- 304: Bereich
- 316: Chipkarte
- 332: Karteninlay
- 334: Deckschicht
- 336: Trennschicht
- 338: Deckschicht
- 402: Anzeigeschicht
- 404: optische Schicht
- 416: Chipkarte
- 432: Karteninlay
- 434: Deckschicht
- 436: Trennschicht
- 438: Deckschicht
- 502: Anzeigeschicht
- 504: optische Schicht
- 516: Chipkarte
- 532: Karteninlay
- 534: Deckschicht
- 536: Trennschicht
- 538: Deckschicht
- 602: Anzeigeschicht
- 604: optische Schicht
- 616: Chipkarte
- 638: Deckschicht
- 640: Linsen
- 702: Anzeigeschicht
- 704: optische Schicht
- 736: Trennschicht
- 738: Deckschicht
- 742: Linie
- 802: Anzeigeschicht
- 804: optische Schicht
- 806: Speicher
- 808: Treiber
- 844: Dokument
- 846: integrierter elektronisches Schaltkreis
- 848: kryptographisches Protokoll
- 850: Antenne
- 852: Lesegerät
- 854: RFID-Schnittstelle
- 856: Prozessor
- 858: Nutzerschnittstelle
- 860: Aufdruck
- 902: Anzeigeschicht
- 962: Gerät
- 964: Gehäuseteil
- 966: Gehäuseteil
- 968: Trommel
- 970: Wandung
- 972: Anzeigefläche

## Patentansprüche

1. Dokument mit einer Anzeigevorrichtung, wobei die Anzeigevorrichtung folgendes beinhaltet:
- eine flexible Anzeigeschicht (102; 202; 302; 402; 502; 602; 702; 802) zur Wiedergabe zumindest eines ersten (228) und eines zweiten (230) Bildes,
- ein Bild (226), das unterhalb oder oberhalb der Anzeigeschicht aufgedruckt ist,
- eine flexible optische Schicht (104; 204; 304; 404; 504; 604; 704), die auf der Anzeigeschicht angeordnet ist, wobei die optische Schicht zur autostereoskopischen Erzeugung eines dreidimensionalen Bildes aus den ersten (228) und zweiten (230) Bildern ausgebildet ist,
wobei die Anzeigeschicht als LED-Anzeige, als OLED-Anzeige, als Drehelementanzeige, als elektrochrome Anzeige oder als elektrophoretische Anzeige ausgebildet ist.

2. Dokument nach Anspruch 1, und wobei die optische Schicht schaltbar ist, um die autostereoskopische Erzeugung des dreidimensionalen Bildes ein- oder auszuschalten.

3. Dokument nach Anspruch 1, wobei die Anzeigeschicht als Aktiv-Matrixanzeige ausgebildet ist.

4. Dokument nach Anspruch 1, wobei die Anzeigeschicht ohne Matrix ausgebildet ist und nur an entsprechenden Bildpunkten die kontrastgebenden Elemente aufgedruckt sind.

5. Dokument nach Anspruch 1, wobei die Anzeigeschicht vollflächig und ohne Matrix ausgebildet ist, so dass einzeine Bildpunkte für eine Personallsierung deaktivierbar sind.

6. Dokument nach einem der vorhergehenden Ansprüche, wobei die optische Schicht zur autostereoskopischen Erzeugung mehrerer dreidimensionaler Bilder aus entsprechenden mehreren ersten und zweiten Bildern zur Betrachtung eines abgebildeten Objekts aus verschiedenen Winkeln ausgebildet ist.

7. Dokument nach Anspruch 2, wobei die optische Schicht ein Formgedächtniselement aufweist, wobei durch Auslösung des Formgedächtniseffekts die autostereoskopische Erzeugung des dreidimensionaien Bildes ein- oder ausschaltbar ist.

8. Dokument nach Anspruch 2, wobei die optische Schicht ein piezoelektrisches Element aufweist durch dessen Aktivierung die optische Schicht eine Formänderung erfährt, wodurch die autostereoskopische Erzeugung des dreidimensionalen Bildes ein- oder ausschaltbar ist.

9. Dokument nach Anspruch 2, wobei die optische Schicht piezoelektrisch ansteuerbare Polymerlinsen beinhaltet.

10. Dokument nach Anspruch 2, wobei die optische Schicht durch eine zweite Anzeigeschicht realisiert ist.

11. Dokument nach einem der vorhergehenden Ansprüche, mit einem elektronischen Speicher (106; 806) für Bilddaten der zumindest ersten und/oder zweiten Bilder.

12. Dokument nach einem der vorhergehenden Ansprüche, mit einem RFID Transponder (846, 850) zur Ansteuerung der Anzeigesrhicht und / oder der optischen Schicht.

13. Dokument nach Anspruch 12, wobei der RFID Transponder zur Energieversorgung der Anzeigeschicht und / oder der optischen Schicht dient.

14. Dokument nach einem der vorhergehenden Ansprüche, mit einer zusätzlichen zweidimensionalen Darstellung (860) des autostereoskopischen Bildes.

15. Dokument nach Anspruch 14, wobei die zusätzliche Darstellung aufgedruckt ist.

16. Dokument mit einer Anzeigevorrichtung, wobei die Anzeigevorrichtung folgendes beinhaltet:
- eine flexible Anzeigeschicht (102; 202; 302; 402; 502; 602; 702; 802) zur Wiedergabe zumindest eines ersten Bildes (228),
- ein Bild (226), das unterhalb oder oberhalb der Anzeigeschicht aufgedruckt ist,
- eine flexible optische Schicht (104; 204; 304; 404; 504; 604; 704), die auf der Anzeigeschicht angeordnet ist, wobei die optische Schicht zur autostereoskopischen Erzeugung eines dreidimensionalen Bildes aus dem ersten Bild (228) und dem Bild (226) ausgebildet ist,
wobei die Anzeigeschicht als LED-Anzelge, als OLED-Anzeige, als Drehelementanzeige, als elektrochrome Anzeige oder als elektrophoretische Anzeige ausgebildet ist.

## Claims

1. Document comprising a display device, wherein the display device comprises the following:
- a flexible display layer (102; 202; 302; 402; 502; 602; 702; 802), for reproducing at least one first (228) and one second (230) image,
- an image (226) printed below or above the display layer,
- a flexible optical layer (104; 204; 304; 404; 504; 604; 704) arranged on the display layer, wherein the optical layer is designed for the autostereoscopic generation of a three-dimensional image from the first (228) and second (230) images,
wherein the display layer is designed as an LED display, as an OLED display, as a rotary element display, as an electrochromic display or as an electrophoretic display.

2. Document according to Claim 1, and wherein the optical layer is switchable in order to switch the autostereoscopic generation of the three-dimensional image on or off.

3. Document according to Claim 1, wherein the display layer is designed as an active matrix display.

4. Document according to Claim 1, wherein the display layer is designed without a matrix and the contrast-imparting elements are printed only at corresponding pixels.

5. Document according to Claim 1, wherein the display layer is embodied over the whole area and without a matrix, with the result that individual pixels can be deactivated for personalization.

6. Document according to any of the preceding claims, wherein the optical layer is designed for the autostereoscopic generation of a plurality of three-dimensional images from a corresponding plurality of first and second images for viewing an imaged object from different angles.

7. Document according to Claim 2, wherein the optical layer has a shape memory element, wherein the autostereoscopic generation of the three-dimensional image can be switched on or off by the initiation of the shape memory effect.

8. Document according to Claim 2, wherein the optical layer has a piezoelectric element, through the activation of which the optical layer experiences a shape change, as a result of which the autostereoscopic generation of the three-dimensional image can be switched on or off.

9. Document according to Claim 2, wherein the optical layer comprises piezoelectrically driveable polymer lenses.

10. Document according to Claim 2, wherein the optical layer is realized by a second display layer.

11. Document according to any of the preceding claims, comprising an electronic memory (106; 806) for image data of the at least first and/or second images.

12. Document according to any of the preceding claims, comprising an RFID transponder (846; 850) for driving the display layer and/or the optical layer.

13. Document according to Claim 12, wherein the RFID transponder serves for the power supply of the display layer and/or of the optical layer.

14. Document according to any of the preceding claims, comprising an additional two-dimensional representation (860) of the autostereoscopic image.

15. Document according to Claim 14, wherein the additional representation is printed.

16. Document comprising a display device, wherein the display device comprises the following:
- a flexible display layer (102; 202; 302; 402; 502; 602; 702; 802), for reproducing at least one first image (228),
- an image (226) printed below or above the display layer,
- a flexible optical layer (104; 204; 304; 404; 504; 604; 704) arranged on the display layer, wherein the optical layer is designed for the autostereoscopic generation of a three-dimensional image from the first image (228) and the image (226),
wherein the display layer is designed as an LED display, as an OLED display, as a rotary element display, as an electrochromic display or as an electrophoretic display.

## Revendications

1. Document comprenant un dispositif d'affichage, dans lequel le dispositif d'affichage comprend les éléments suivants :
- une couche d'affichage souple (102 ; 202 ; 302 ; 402 ; 502 ; 602 ; 702 ; 802) pour la reproduction d'au moins une première (228) et une seconde (230) images,
- une image (226) qui est imprimée en dessous ou au-dessus de la couche d'affichage,
- une couche optique souple (104 ; 204 ; 304 ; 404 ; 504 ; 604 ; 704) qui est disposée sur la couche d'affichage, la couche optique étant conçue pour générer de manière autostéréoscopique une image tridimensionnelle à partir des première (228) et seconde (230) images,
dans lequel la couche d'affichage est réalisée sous la forme d'un afficheur LED, d'un afficheur OLED, d'un afficheur à éléments pivotants, d'un afficheur électrochrome ou d'un afficheur électrophorétique.

2. Document selon la revendication 1, dans lequel la couche optique peut être commandée afin de déclencher ou d'interrompre la production autostéréoscopique de l'image tridimensionnelle.

3. Document selon la revendication 1, dans lequel la couche d'affichage est réalisée sous la forme d'un afficheur à matrice active.

4. Document selon la revendication 1, dans lequel la couche d'affichage est réalisée sans matrice et dans lequel les éléments générateurs de contraste ne sont imprimés que sur des pixels correspondants.

5. Document selon la revendication 1, dans lequel la couche d'affichage est formée sur toute la surface et sans matrice afin que des pixels individuels puissent être désactivés à des fins de personnalisation.

6. Document selon l'une des revendications précédentes, dans lequel la couche optique est conçue pour la production autostéréoscopique de plusieurs images tridimensionnelles à partir de plusieurs premières et secondes images correspondantes pour l'observation d'un objet dont l'image est formée sous des angles différents.

7. Document selon la revendication 2, dans lequel la couche optique comprend un élément à mémoire de forme, dans lequel la production autostéréoscopique de l'image tridimensionnelle peut être activée ou désactivée par déclenchement de l'effet de mémoire de forme.

8. Document selon la revendication 2, dans lequel la couche optique comprend un élément piézoélectrique dont l'activation produit une modification de forme de la couche optique au moyen de laquelle la production autostéréoscopique de l'image tridimensionnelle peut être activée ou désactivée.

9. Document selon la revendication 2, dans lequel la couche optique comporte des lentilles polymères pouvant être attaquées de manière piézoélectrique.

10. Document selon la revendication 2, dans lequel la couche optique est réalisée par l'intermédiaire d'une seconde couche d'affichage.

11. Document selon l'une des revendications précédentes, comprenant une mémoire électronique (106 ; 806) destinée à des données d'image d'au moins la première et/ou la seconde image.

12. Document selon l'une des revendications précédentes, comprenant un transpondeur RFID (846, 850) pour l'attaque de la couche d'affichage et/ou de la couche optique.

13. Document selon la revendication 12, dans lequel le transpondeur RFID est utilisé pour alimenter en énergie la couche d'affichage et/ou la couche optique.

14. Document selon l'une des revendications précédentes, comprenant une représentation bidimensionnelle supplémentaire (860) de l'image autostéréoscopique.

15. Document selon la revendication 14, dans lequel la représentation supplémentaire est imprimée.

16. Document comprenant un dispositif d'affichage, dans lequel le dispositif d'affichage comprend les éléments suivants :
- une couche d'affichage souple (102 ; 202 ; 302 ; 402 ; 502 ; 602 ; 702 ; 802) pour la reproduction d'au moins une première image (228),
- une image (226) qui est imprimée en dessous ou au-dessus de la couche d'affichage,
- une couche optique souple (104 ; 204 ; 304 ; 404 ; 504 ; 604 ; 704) qui est disposée sur la couche d'affichage, la couche optique étant conçue pour générer de manière autostéréoscopique une image tridimensionnelle à partir de la première image (228) et de l'image (226),
dans lequel la couche d'affichage est réalisée sous la forme d'un afficheur LED, d'un afficheur OLED, d'un afficheur à éléments pivotants, d'un afficheur électrochrome ou d'un afficheur électrophorétique.
